# EUROPÄISCHE PATENTSCHRIFT

(11) **EP 4 415 850 B1**
(45) Veröffentlichungstag und Bekanntmachung des Hinweises auf die Patenterteilung: **25.02.2026**
(21) Anmeldenummer: 22830394.7
(22) Anmeldetag: 14.10.2022
(51) Int. Cl.: B01D 45/08, B01D 46/00, B01D 46/10, B01D 46/52

(54) **FILTERSTUFE**
FILTER STAGE
ÉTAGE FILTRANT

(30) Priorität: 14.10.2021 DE 102021211600
(43) Veröffentlichungstag der Anmeldung: 21.08.2024
(73) Patentinhaber: Kara, Jürgen, 96465 Neustadt/Coburg (DE)
(72) Erfinder: Kara, Jürgen, 96465 Neustadt/Coburg (DE)
(74) Vertreter: Isarpatent
(86) Internationale Anmeldenummer: PCT/EP2022/078676
(87) Internationale Veröffentlichungsnummer: WO 2023/062199

(56) Entgegenhaltungen:
- EP-A1- 2 532 409
- EP-A1- 3 354 353
- WO-A1-2007/028176
- DE-A1- 102018 205 229
- US-A1- 2003 159 415

## Beschreibung

### GEBIET DER ERFINDUNG

Die vorliegende Erfindung betrifft eine Filterstufe zur Verwendung in einem Filtermodul. Des Weiteren betrifft die Erfindung ein Verfahren zum Transport mehrerer Filterstufen.

### TECHNISCHER HINTERGRUND

Filtermodule werden für unterschiedliche Anwendungen eingesetzt. Beispielsweise können diese im Bereich von Sprühkabinen zur Aufnahme von Farbnebel eingesetzt werden. Die Filtermodule dienen dabei zur Reinigung der von der Sprühkabine abgeführten Luft. Die Farbpartikel, welche nicht an einem zu besprühenden Objekt anhaften, können durch die Filtermodule abgeschieden werden. Derartige Filtermodule können demnach ebenso als Abscheider bzw. Abscheidermodule bezeichnet werden.

Für gewöhnlich besitzen Filtermodule eine Eintrittsseite, die für den Eintritt eines zu reinigenden Luftstroms ausgebildet ist. Auf einer gegenüberliegenden Seite ist bevorzugt eine Austrittsseite angeordnet, die zum Austritt des gereinigten Luftstroms dient.

Beispielsweise können mehrere gleichartige Filtermodule nebeneinander bzw. aufeinander angeordnet werden, sodass eine zusammenhängende Fläche entsteht, die beispielsweise unterhalb oder auch seitlich neben dem zu besprühenden Objekt angeordnet werden kann. Dabei sind alle Eintrittsseiten auf einer Seite der zusammenhängenden Fläche angeordnet. Bevorzugt wird sozusagen hinter den Filtermodulen ein Unterdruck erzeugt, sodass ein Luftstrom durch die Filtermodule entsteht, der von der Eintrittsseite in Richtung der Austrittsseite strömt. Durch den Luftstrom wird die zu reinigende Luft durch die Filtermodule hindurchgeführt und gereinigt, indem die Partikel innerhalb der Filtermodule anhaften bzw. an den Filtermodulen abgeschieden werden.

Die Druckschrift EP 1 492 609 B1 zeigt ein Filtermodul in Form eines Hohlkörpers, das aus einem Papierstoff ausgebildet ist. Innerhalb des Filtermoduls sind zumindest zwei Wände angeordnet, die quer zur Richtung des eintretenden Luftstroms angeordnet sind. Die Wände weisen jeweils Öffnungen auf, wobei die Öffnungen der Wände von der Eintrittsseite in Richtung der Austrittsseite kleiner werden und/oder versetzt zueinander angeordnet sind. Durch die Wände entstehen Kammern innerhalb des Grundkörpers. Der zu reinigende Luftstrom wird mäanderförmig durch die unterschiedlich angeordneten Öffnungen in den hintereinander angeordneten Wänden geführt. Über einen Griff kann zumindest eine Kammer geöffnet werden, sodass in die Kammer ein Füllmaterial oder eine weitre Filterstufe eingesetzt werden kann.

Weiterhin ist aus der EP 3 167 948 A1 ein Filtermodul bekannt, das ebenso aus einem Hohlkörper besteht, in welchen unterschiedliche Reinigungsstrukturen eingesetzt werden können. Die hintereinander angeordneten Reinigungsstrukturen können einzeln entnommen werden, sodass unterschiedlich verschmutzte Reinigungsstrukturen zu unterschiedlichen Zeiträumen ausgewechselt werden können. Ebenso können andere Reinigungsstrukturen, insbesondere als zweite Filterstufen eingesetzt werden, um eine feine Endfilterung zu erzielen.

Nachteilig ist bei derartigen Filtermodulen, dass durch die Umleitung des Luftstroms in unterschiedliche Raumrichtungen die Anhaftungen der Partikel innerhalb des Filtermoduls sehr unterschiedlich, d. h. sehr ungleich verteilt, ausfällt. Dies resultiert aus der mäanderförmigen Führung des Luftstroms, wodurch der Luftstrom nach Eintritt auf der Eintrittsseite um annähernd 90° in jede mögliche Raumrichtung umgeleitet wird. Durch diese schlagartige Umleitung des Luftstroms, beispielsweise nach links, rechts, oben oder unten innerhalb des Filtermoduls, erfolgt eine abrupte und sehr starke Abbremsung. In einer ersten Kammer zwischen einer ersten und einer zweiten Wand, die der zu reinigende Luftstrom als erstes erreicht, werden folglich die meisten Partikel abgeschieden. Weiter hinten angeordnete Kammern werden nur noch von wenigen Partikeln erreicht. Die Effizienz und Lebensdauer jedes Filtermoduls wird dadurch verringert, da diese bereits ausgetauscht werden müssen, wenn weiter hinten angeordnete Bereiche innerhalb des Filtermoduls erst sehr geringe Partikelansammlungen aufweisen.

In der EP 3 167 948 A1 wird dies dadurch gelöst, dass einzelne Reinigungsstrukturen, die hintereinander innerhalb des Grundkörpers angeordnet sind, einzeln entnommen werden können. Dadurch kann die Reinigungsstruktur, welche am nächsten an der Eintrittsseite angeordnet ist, ausgetauscht werden.

Weiterhin kann auf die US 2003/159415 A1 verwiesen werden, die ein zickzackförmiges Filterelement für ein Klimagerät oder ein Heizgerät zeigt. Das Filterelement ist in einem Aufnahmeelement gehalten, wobei das Aufnahmeelement einen sägezahnförmigen Streifen aufweist, die zur Platzierung des zickzackförmigen Filterelements ausgelegt sind.

Ein weiterer Filter ist in der EP 2 532 409 A1 gezeigt, wobei dieser als Papiergelegefilter ausgebildet ist. So sind mehrere zickzackförmige Schichten übereinander gelagert angeordnet.

Die EP 3 354 353 A1 zeigt einen zickzackförmigen Filtereinsatz, der aus einzelnen Abschnitten besteht, die nicht miteinander verbunden sind. Um Stabilität in dem Filtereinsatz herzustellen, werden die einzelnen Abschnitte über konisch ausgeführte Füllelemente miteinander verbunden.

Während des Betriebs in einer Sprungkabine, wobei meist mehrere baugleiche Filtermodule nebeneinander bzw. aufeinander zu einer zusammenhängenden Fläche angeordnet sind, ist der Austausch einzelner Reinigungsstrukturen aus jedem einzelnen Filtermodul jedoch nur unter großem Zeitaufwand möglich. Insbesondere muss zum Austausch einer Reinigungsstruktur aus jedem einzelnen Filtermodul jeder einzelne Hohlkörper geöffnet werden. Dies ist bei nebeneinander sowie aufeinander angeordneten Filtermodulen nicht möglich. Demnach müsste die zusammenhängende Fläche aus Filtermodulen zunächst auseinandergebaut werden, sodass jedes einzelne Filtermodul zugänglich ist. Daraus resultiert ein enormer Zeitaufwand. In der Praxis ist der Austausch einzelner Reinigungselemente daher kaum möglich. Folglich wird erfahrungsgemäß das Filtermodul bereits dann komplett ausgetauscht, wenn lediglich das erste Reinigungselement derart verschmutzt ist, dass der Luftstrom dieses eine Reinigungselement nicht mehr durchströmen kann.

Nachteilig ist weiterhin der Transport von noch nicht zusammengebauten Filtermodulen oder Reinigungsstrukturen umständlich, da durch die Faltstruktur ein nicht zusammengebautes Filtermodul, das als im Wesentlichen zweidimensionales Element vorliegt, viel Platz wegnimmt und unhandlich ist. Teilelemente, die beim Zusammenbau nach innen gefaltet werden, stehen am Rand über und können zudem beschädigt werden.

### ZUSAMMENFASSUNG DER ERFINDUNG

Vor diesem Hintergrund liegt der vorliegenden Erfindung die Aufgabe zugrunde, eine verbesserte Filterstufe anzugeben.

Erfindungsgemäß wird diese Aufgabe durch eine Filterstufe mit den Merkmalen des Patentanspruchs 1 und durch ein Verfahren zum Transport mehrerer Filterstufen mit den Merkmalen des Patentanspruchs 17 gelöst.

Demgemäß ist vorgesehen:
Eine Filterstufe zur Verwendung in einem Filtermodul, welches zur Abscheidung von Farbpartikeln aus einem Luftstrom ausgebildet ist, mit einem Aufnahmeelement, das eine Eintrittsseite, für den Eintritt eines zu reinigenden Luftstroms, und eine Austrittsseite, für den Austritt des gereinigten Luftstroms, aufweist, wobei die Eintrittsseite und die Austrittsseite gegenüberliegend an dem Aufnahmeelement angeordnet sind, einem Filtereinsatz, der in dem Aufnahmeelement aufgenommen ist, wobei das Aufnahmeelement aus Karton ausgebildet ist, wobei der Filtereinsatz zumindest zwei Teilabschnitte aufweist, die jeweils als ebene Fläche ausgebildet sind und von der Eintrittsseite zur Austrittsseite verlaufen, wobei zumindest zwei Teilabschnitte derart zueinander geneigt angeordnet sind, dass sich diese an einem Seitenabschnitt, der zwischen einer Oberkante und einer Unterkante der Teilabschnitte angeordnet ist, kontaktieren und miteinander verbunden sind, wobei der Filtereinsatz einteilig und der Seitenabschnitt als Falz ausgebildet ist, sodass eine Zickzack-Struktur entsteht, wobei die Eintrittsseite und die Austrittsseite zumindest einen Steg aufweist, der quer zur Ausrichtung der Teilelemente verläuft, wobei an dem Steg zumindest eine Lasche angeordnet ist, die zwischen zwei Teilabschnitte eingreift und diese positioniert, wobei die zumindest eine Lasche des Stegs der Eintrittsseite bezüglich einer Länge des Stegs versetzt zu der zumindest einen Lasche des Stegs der Austrittsseite angeordnet ist.
Ein Verfahren zum Transport mehrerer Filterstufen, wobei das Aufnahmeelement in einem aufgefalteten dreidimensionalen Zustand und in einem nicht aufgefalteten zweidimensionalen Zustand in zwei Raumrichtungen eine identische Größe aufweist, sodass zusammengebaute und nicht zusammengebaute Filterstufen in einem Aufnahmeelement eines Filtermoduls transportiert werden können.

Die der vorliegenden Erfindung zugrundeliegende Erkenntnis besteht darin, dass durch eine gleichmäßige Verteilung der Partikel zwischen der Eintrittsseite und der Austrittsseite ein langlebiges sowie effektives Filtermodul ausgebildet werden kann.

Die der vorliegenden Erfindung zugrundeliegende Idee besteht darin, die Luftströmung nicht abzubremsen oder umzulenken, sondern stattdessen ein gleichmäßiges Durchströmen der Filterstufe von der Eintrittsseite zu der Austrittsseite zu ermöglichen, um eine ausgeglichene Anhaftung der Partikel an dem Filtereinsatz innerhalb des Aufnahmeelements zu ermöglichen.

Vorteilhafterweise muss daher der Filtereinsatz über die komplette Lebensdauer der Filterstufe nicht ausgetauscht werden, wobei alle Elemente der Filterstufe bis zur Unbrauchbarkeit, d. h. bis zur Verstopfung durch abgeschiedene Partikel, verwendet werden können.

Bevorzugt kann die Filterstufe als separate Filterstufe in bekannte Filtermodule, wie im Stand der Technik erläutert, integriert werden. Dadurch kann eine abgestimmte Filterung innerhalb des Filtermoduls erzielt werden, wodurch die Abscheideergebnisse optimiert werden können.

Die Geometrie der Filterstufe kann nach dem Prinzip eines Baukastens in andere Filtermodule angepasst und integriert werden. Insgesamt wird daher das Abscheideverhalten des Filtermoduls effizienter ausgestaltet.

Ferner muss mit der vorgeschlagenen Filterstufe der Filtereinsatz nicht mit dem Aufnahmeelement verklebt oder verklammert werden, da dieser durch die Form des Aufnahmeelements in diesem gehalten wird.

Als Filterstufe ist ein Element zu verstehen, das bestimmte Filtereigenschaften aufweist. Die Filterstufe kann ein komplettes Filtermodul ausbilden oder als Teilelement, d. h. als eine Reinigungsstufe innerhalb eines Filtermoduls ausgebildet sein. Dabei kann die Filterstufe als eine Art Nachreinigungsstufe eingesetzt werden und in bekannte Filtermodule als quasi "letzte" Reinigungsstufe eingeschoben werden.

Als Filterelement ist ein Element zu verstehen, an welchem die Partikel abgeschieden werden bzw. anhaften. Das Filterelement ist bevorzugt als ebene Fläche ohne größere Aussparungen oder Löcher ausgebildet, sodass der Luftstrom entlang der ebenen Fläche geleitet werden kann und nicht durch die Fläche umgelenkt wird. Weiterhein ist das Filterelement bevorzugt zumindest teilweise aus einem luftdurchlässigen Material ausgebildet, sodass der Luftstrom durch das Material des Filterelements zumindest teilweise hindurchströmen kann.

Bevorzugt ist jeder Teilabschnitt vertikal in dem Aufnahmeelement ausgerichtet. Insbesondere verläuft jeder Teilabschnitt über die komplette Höhe des Aufnahmeelements, sodass voneinander getrennte vertikale Kammern ausgebildet werden, die durch die Teilelemente begrenzt sind und von der Eintrittsseite zur Austrittsseite verlaufen.

Die Eintrittsseite und die Austrittsseite weisen jeweils zumindest eine Öffnung auf, sodass der Luftstrom durch die Filterstufe strömen kann.

Das Aufnahmeelement ist aus Karton ausgebildet. Vorteilhafterweise ist das Aufnahmeelement komplett aus Karton ausgebildet. Ein derartiges Filtermodul kann auch mit anhaftenden Partikeln einfach entsorgt, insbesondere verbrannt werden. Zudem sind die Herstellungskosten minimal.

Erfindungsgemäß sind zumindest zwei Teilabschnitte derart zueinander geneigt angeordnet, dass sich diese an einem Seitenabschnitt, der zwischen der Oberkante und der Unterkante angeordnet ist, kontaktieren und/oder miteinander verbunden sind. Dadurch kann ein höherer Reinigungsgrad erzeugt werden, beispielsweise im Sinne einer Feinreinigung oder Endreinigung, da die Luftströmung den Filtereinsatz durchströmen muss, wenn er von der Eintrittsseite zur Austrittsseite strömt. Der Filtereinsatz ist in einer derartigen Ausführungsform daher aus einem luftdurchlässigen Material ausgebildet, beispielsweise ein Polyestermaterial.

Erfindungsgemäß ist der Filtereinsatz einteilig und der Seitenabschnitt als Falz ausgebildet, sodass eine Zickzack-Struktur entsteht. Vorteilhaft ist auf diese Weise ein Filtereinsatz ausbildbar, der eine stabile dreidimensionale Struktur aufweist.

Erfindungsgemäß ist der Filtereinsatz als einteilige Zickzack-Struktur ausgebildet und vertikal in dem Aufnahmeelement ausgerichtet, sodass einzelne Taschen entstehen, die quer zu dem Luftstrom innerhalb des Aufnahmeelements ausgerichtet sind. Die Taschen werden dabei von Teilelementen des Filtereinsatzes gebildet, die geneigt zueinander angeordnet sind. Dadurch kann besonders effektiv eine Feinreinigung mit der Filterstufe erreicht werden.

Erfindungsgemäß weisen die Eintrittsseite und/oder die Austrittsseite zumindest einen Steg auf, der quer zur Ausrichtung der Teilelemente verläuft. Der Steg verläuft dabei bevorzugt quer durch die Öffnung an der Eintrittsseite und/oder die Austrittsseite. Insbesondere ist der Steg horizontal, sodass die Teilelemente durch den Steg stabilisiert werden können. Der Steg weist bevorzugt eine geringe Breite auf, sodass der Luftstrom durch den Steg kaum beeinflusst wird. Vorteilhafterweise wird die Öffnung an der Eintrittsseite durch den Steg kaum verkleinert. Vorteilhafterweise ist der Steg einteilig mit dem Aufnahmeelement ausgebildet.

Erfindungsgemäß ist an dem Steg zumindest eine Lasche angeordnet, die zwischen zwei Teilabschnitte eingreift und diese positioniert. Die Lasche ist bevorzugt als eine Art Flügelklappe ausgebildet, die in Richtung der Luftströmung ausgerichtet ist. Dadurch wird die Luftströmung durch die Lasche nicht beeinflusst. Die Lasche kann als flächiges Element ausgebildet sein, das zumindest ein Teilelement, insbesondere zwei Teilelemente, kontaktiert und damit in der Ausrichtung hält bzw. positioniert. Die Lasche kann weiterhin zur Lenkung des Luftstroms dienen, da diese eine Trennung des Luftstroms unterhalb und oberhalb des Stegs ausbilden kann. Insbesondere kann auch die Lasche zum Abscheiden der Partikel aus dem Luftstrom dienen.

Erfindungsgemäß ist die zumindest eine Lasche des Stegs der Eintrittsseite bezüglich einer Länge des Stegs versetzt zu der zumindest einen Lasche des Stegs der Austrittsseite angeordnet. Dadurch können Teilelemente von der Eintrittsseite zur Austrittsseite innerhalb des Aufnahmeelements gehalten und positioniert werden, die geneigt zu einer Verbindungsebene zwischen der Eintrittsseite zu der Austrittsseite ausgerichtet sind.

Vorteilhafte Ausgestaltungen und Weiterbildungen ergeben sich aus den weiteren Unteransprüchen sowie aus der Beschreibung unter Bezugnahme auf die Figuren der Zeichnung.

Gemäß einer vorteilhaften Ausführungsform kann der Filtereinsatz zumindest drei, insbesondere drei bis vierzehn, Teilabschnitte aufweisen. Vorteilhaft sind die Teilabschnitte parallel zueinander angeordnet und parallel zu der eintretenden Luftströmung orientiert. Die Teilabschnitte sind bevorzugt nicht direkt in Kontakt und bilden eine Art Abscherflächen aus, an denen der Luftstrom vorbeistreift. Ein abruptes Abbremsen der Strömungsgeschwindigkeit kann dadurch verhindert werden.

Gemäß einer Weiterbildung können zumindest zwei, insbesondere alle, Teilabschnitte parallel zu einer Verbindungsebene zwischen der Eintrittsseite und der Austrittsseite ausgerichtet sein. Als Verbindungsebene ist eine Ebene zu verstehen, die von der Eintrittsseite zur Austrittsseite verläuft. Bevorzugt ist die Verbindungsebene rechtwinklig zur Eintrittsseite und zur Austrittsseite angeordnet. Folglich sind die Teilabschnitte bevorzugt rechtwinklig zur Eintrittsseite und zur Austrittsseite ausgerichtet. Die Teilabschnitte sind bevorzugt nicht direkt in Kontakt, sodass die Luftströmung zwischen jeweils zwei Teilelementen, insbesondere ungehindert, hindurchströmen kann. Auf diese Weise können gleichartige, sowie getrennt voneinander verlaufende Strömungen innerhalb der Filterstufe ausgebildet werden.

Gemäß einer Ausführungsform können zumindest zwei, insbesondere alle, Teilabschnitte geneigt, insbesondere um einen Winkel zwischen 5 und 50° geneigt, zu einer Verbindungsebene zwischen der Eintrittsseite und der Austrittsseite ausgerichtet sein. Dadurch kann ein höherer Reinigungsgrad erzeugt werden, beispielsweise im Sinne einer Feinreinigung oder Endreinigung, da die Teilabschnitte geneigt bezüglich der Strömungsrichtung der Luftströmung ausgerichtet sind.

Gemäß einer Ausführungsform kann jeder Steg zumindest zwei Laschen aufweisen, die bezüglich einer Länge des Stegs der Eintrittsseite und der Austrittsseite derart versetzt angeordnet sind, dass entlang der Stege Aussparungen entstehen, in welchen die Teilabschnitte gehalten werden. Dabei kann besonders vorteilhaft ein Filtereinsatz innerhalb des Aufnahmeelements ohne Klebeverbindung positioniert werden. Vorteilhafterweise ist eine derartige Ausführungsform für einen Filtereinsatz ausgebildet, der eine Zickzack-Struktur aufweist. Mit anderen Worten ist der Filtereinsatz als eine Art Plissee ausgebildet. Ist der Filtereinsatz als Zickzack-Struktur ausgebildet, greifen die Laschen bevorzugt in die Taschen ein, um den Filtereinsatz formgebend und stabil aufzunehmen, insbesondere wenn dieser aus einem Polyestervlies ausgebildet ist. Die Filterstufe kann daher besonders einfach zusammengebaut werden, indem der Filtereinsatz von oben in das Aufnahmeelement eingeschoben wird. Das Aufnahmeelement kann anschließend vergleichbar zu einem Karton mit einem Steckverschluss verschlossen werden.

Bei einer vorteilhaften Ausführungsform können die Laschen einteilig mit dem Steg verbunden und durch ein Gelenk kippbar bezüglich des Stegs angeordnet sind. Das Gelenk kann insbesondere durch eine Perforierung oder Prägung ausgebildet sein. Dadurch kann beim Zusammenbau das Aufnahmeelement aus einem im Wesentlichen zweidimensionalen Element zu einer dreidimensionalen Filterstufe einfach und ohne Fachkenntnisse gefaltet werden.

Die Laschen können aus dem vorhandenen Abfallmaterial, welches für die Öffnungen an der Eintrittsseite und/oder Austrittsseite herausgetrennt würde, insbesondere durch Stanzen mittels einer Stanzgeometrie, ausgebildet werden.

Bei einer vorteilhaften Ausführungsform können die Laschen konische Seitenkanten aufweisen, sodass die Teilabschnitte des Filtereinsatzes geneigt zwischen der Eintrittsseite und der Austrittsseite gehalten werden. Diese Ausführungsform eignet sind insbesondere für einen Filtereinsatz mit einer Zickzack-Struktur.

Gemäß einer vorteilhaften Ausführungsform kann das Aufnahmeelement an zumindest zwei Seitenwänden, die zwischen der Eintrittsseite und der Austrittsseite angeordnet sind, jeweils einen Falz aufweisen, sodass das Aufnahmeelement zu einem in Wesentlichem zweidimensionalen Element faltbar ist. Der Falz ist bevorzugt mittig in der jeweiligen Seitenwand angeordnet, sodass die Seitenwände in sich gefaltet werden können.

Gemäß einer Weiterbildung kann der Filtereinsatz ein rezyklierbares Material und/oder Polyestermaterial enthalten. Der Filtereinsatz kann aus einem Papiergelege, einem Polyestervlies, einem Vlies, einem Polyester, insbesondere mit einer Dichte von 250 g/m2 bis 300 g/m2, bevorzugt 290 g/m2 und/oder aus einem 3D-Filament ausgebildet sein. Dadurch kann der Filtereinsatz im Vergleich zu den verbleibenden Zwischenräumen zwischen den Teilelementen einen vergleichsweise geringen Querschnitt aufweisen, wodurch verbesserte Filtereigenschaften erzielt werden können. Bevorzugt ist der Filtereinsatz aus einem faltbaren bzw. umformbaren Polyestermaterial ausgebildet, wenn dieses eine Zickzack-Struktur aufweist. Ein derartiges Filtermodul kann auch mit anhaftenden Partikeln einfach entsorgt, insbesondere verbrannt werden. Zudem sind die Herstellungskosten minimal.

Gemäß einer vorteilhaften Ausführungsform kann das Aufnahmeelement an der Eintrittsseite und an der Austrittsseite eine quadratische oder rechteckige Grundform aufweisen, wobei ein Abstand zwischen der Eintrittsseite und der Austrittsseite kleiner als eine Seitenkante der Grundform ist, insbesondere beträgt der Abstand höchstens der Hälfte der Länge einer Seitenkante. Der Abstand beschreibt dabei die Tiefe der Filterstufe. Diese kann insbesondere 80 bis 500 mm, bevorzugt 150 bis 300 mm, betragen. Die Grundfläche kann rechteckig oder quadratisch ausgebildet sein, mit einer Seitenlänge von 400 bis 600 mm, insbesondere 500 **mm.**

Bevorzugt ist die Filterstufe als eine Art Karton ausgebildet. Dadurch kann eine dreidimensionale Struktur ausgebildet werden, die einfach und schnell zusammengebaut werden kann. Verkleben, Klammern oder Blockverleimen der einzelnen Komponenten ist nicht notwendig, wodurch der Herstellungsprozess sehr vereinfacht wird. Zudem kann eine platzsparende Lagerung vor dem Zusammenbau sichergestellt werden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### INHALTSANGABE DER ZEICHNUNG

Die vorliegende Erfindung wird nachfolgend anhand der in den schematischen Figuren der Zeichnung angegebenen Ausführungsbeispiele näher erläutert. Es zeigen dabei:
- Fig. 1: eine Ausführungsform eines Filtermoduls;
- Fig. 2: eine Draufsicht auf Fig. 1;
- Fig. 3: eine Ausführungsform einer Filterstufe;
- Fig. 4: eine weitere Ausführungsform einer Filterstufe;
- Fig. 5: eine Frontansicht der Ausführungsform nach Fig. 4;
- Fig. 6: eine weitere Frontansicht der Ausführungsform nach Fig. 4 mit eingesetztem Filtereinsatz;
- Fig. 7: eine Schnittdarstellung aus Fig. 6;
- Fig. 8: eine Schnittdarstellung aus Fig. 6 ohne Filtereinsatz;
- Fig. 9: eine weitere Ausführungsform einer Filterstufe;
- Fig. 10: eine Schnittdarstellung aus Fig. 9.

Die beiliegenden Figuren der Zeichnung sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

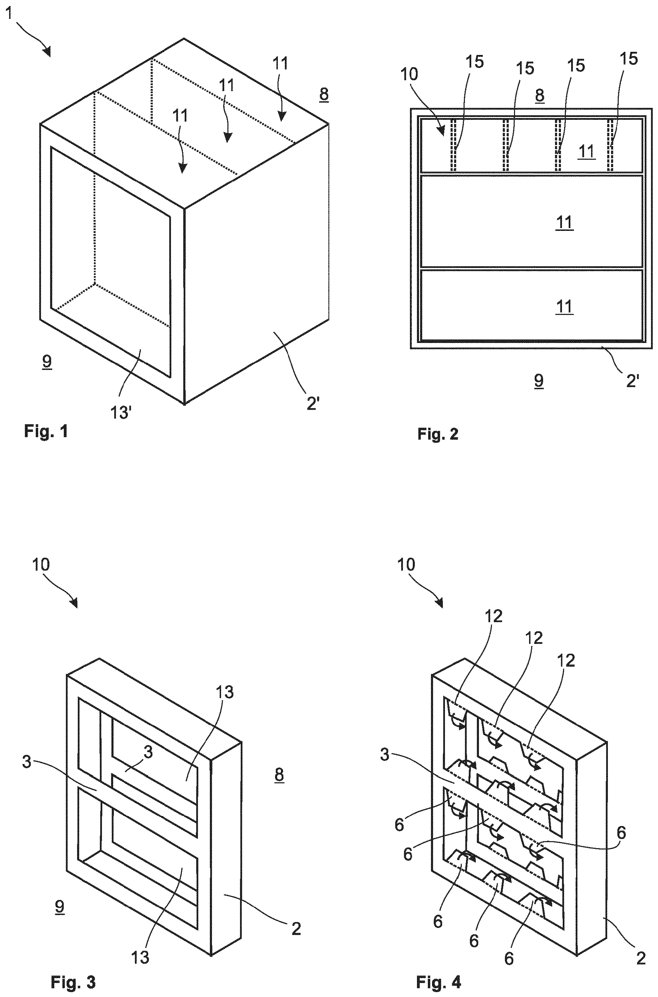

Fig. 1 zeigt eine Ausführungsform eines Filtermoduls 1, das zur Abscheidung von Farbpartikeln aus einem Luftstrom, ausgebildet ist. Das Filtermodul 1 weist ein Aufnahmeelement 2 auf, das im Innern mit drei Hohlräumen 11 ausgestattet ist. Der vorderste Hohlraum 11 ist dabei mit der Öffnung 13 an der Eintrittsseite 9 verbunden. In jedem der Hohlräume 11 können unterschiedliche Filterstufen in Form von beispielsweise unterschiedlichen Reinigungsstrukturen eingesetzt werden. In einen der Hohlräume 11 kann beispielsweise eine Filterstufe 10 von oben eingeschoben werden.

Fig. 2 zeigt eine Draufsicht auf Fig. 1. In dieser Darstellung ist die Filterstufe 10 erkennbar, welche in dieser Ausführungsform vier Teilabschnitte 15 aufweist. Die Teilabschnitte 15 verlaufen parallel zu einer Verbindungsebene, welche von der Eintrittsseite 9 zur Austrittsseite 8 ausgerichtet ist.

Fig. 3 zeigt eine Ausführungsform einer Filterstufe 10. In dieser Darstellung ist lediglich das Aufnahmeelement 2 abgebildet. Dieses weist an der Eintrittsseite sowie an der Austrittsseite jeweils zwei Öffnungen 13 auf, die durch jeweils einen Steg 3 getrennt sind. Der Steg 3 ist einteilig mit dem Aufnahmeelement 2 ausgebildet.

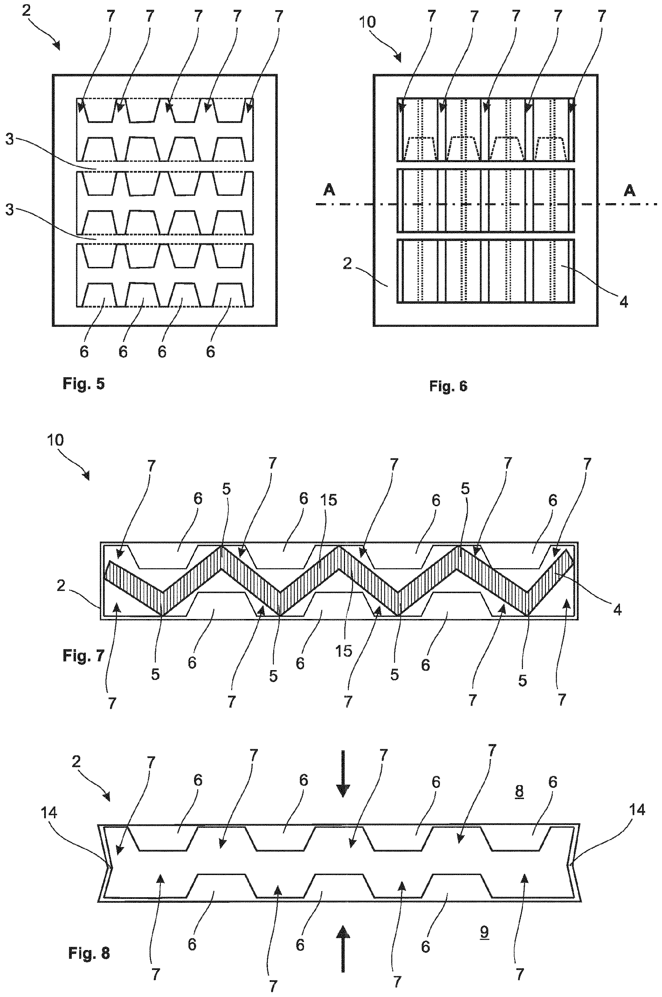

Fig. 4 zeigt eine weitere Ausführungsform einer Filterstufe 10. In dieser Ausführungsform sind an dem Steg 3 mehrere Laschen 6 angeordnet. Die Laschen 6 können über ein Gelenk 12 bezüglich des Stegs 3 in der dargestellten Pfeilrichtung gekippt werden, sodass diese in eine Position ausgerichtet werden, die im Wesentlichen rechtwinklig zum Steg 3 angeordnet ist. Dies ist beispielsweise in Fig. 7 dargestellt. Die Laschen 6 können aus dem Material ausgeformt werden, das im Bereich der Öffnungen 13 als Restmaterial bei der Herstellung entfernt worden wäre.

Das Aufnahmeelement 2 weist eine rechteckige oder quadratische Form auf, wobei ein Abstand zwischen der Eintrittsseite 9 und der Austrittsseite 8 kleiner als eine Seitenkante der Grundform ist. Dadurch kann der die Filterstufe 10 besonders vorteilhaft als zweite Filterstufe in einem bestehenden Filtermodul 1 nachgerüstet werden.

Fig. 5 eine Frontansicht der Ausführungsform nach Fig. 4. In dieser Darstellung sind die Laschen 6 dargestellt, bevor diese entlang der Gelenke 12 abgewinkelt werden. Die Laschen 6 weisen konische Seitenkanten auf, sodass geneigt angeordnete Teilabschnitte zwischen der Eintrittsseite und der Austrittsseite in dem Aufnahmeelement 2 gehalten werden können.

Fig. 6 zeigt eine weitere Frontansicht der Ausführungsform nach Fig. 4 mit eingesetztem Filtereinsatz 4. In der oberen Öffnung an der Eintrittsseite sind mit einer gestrichelten Linie die Laschen 6 dargestellt, welche zwischen den Filtereinsatz 4 eingreifen und diesen positionieren.

Fig. 7 zeigt eine Schnittdarstellung aus Fig. 6. Die Laschen 6 an der Eintrittsseite sind bezüglich einer Länge des Stegs 3 versetzt zu den Laschen 6 an der Austrittsseite angeordnet. Dadurch entstehen ebenso versetzt angeordnete Aussparungen 7, in welchen die Teilabschnitte 15 gehalten werden. Der Filtereinsatz 4 ist mit einer Zickzack-Struktur ausgebildet. In einer nicht dargestellten Ausführungsform können die Laschen 6 mit den konischen Seitenkanten an die Neigung der Zickzack-Struktur angepasst sein.

Fig. 8 zeigt eine Schnittdarstellung aus Fig. 6 ohne Filtereinsatz 4. Hierbei sind die Aussparungen 7 erkennbar, wobei die Aussparungen 7 an der Eintrittsseite versetzt zu den Aussparungen 7 an der Austrittsseite angeordnet sind. Die zwei Seitenwände, die zwischen der Eintrittsseite 9 und der Austrittsseite 8 angeordnet sind, weisen jeweils einen Falz 14 aufweist, sodass das Aufnahmeelement 2 zu einem in Wesentlichem zweidimensionalen Element faltbar ist. Die Faltrichtung ist durch die Pfeile dargestellt. In einem nicht zusammengebauten Zustand sind die Laschen 6 bevorzugt parallel zu den Stegen 3 angeordnet, sodass ein im Wesentlichen zweidimensionales Element entsteht.

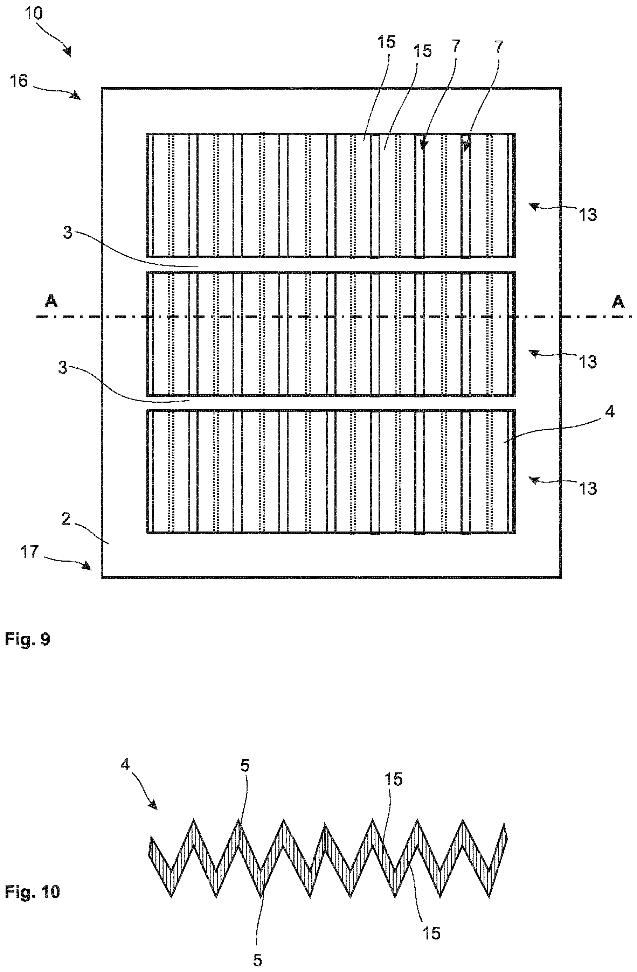

Fig. 9 zeigt eine weitere Ausführungsform einer Filterstufe 10. In dieser Ausführungsform weist der Filtereinsatz 4 eine Vielzahl an zueinander geneigten Teilabschnitten 15 auf. Die Oberkante 16 und die Unterkante 17 jeder Teilabschnitt 15 verläuft dabei von einer Oberkante bis zu einer Unterkante des Aufnahmeelements 2, und daher über die komplette Höhe des Aufnahmeelements 2.

Fig. 10 zeigt eine Schnittdarstellung aus Fig. 9. Um die Zickzack-Struktur zu erreichen, kontaktieren sich die einzelnen Teilelemente 15. Ein zusammenhängender Filtereinsatz 4 wird daher durch Teilelemente 15 gebildet, die durch einen Falz 5 einteilig miteinander verbunden sind.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. So können beispielsweise die Stege 3 sowie die Laschen 6 eine Geometrie aufweisen, die von der dargestellten Ausführungsform abweichen. Beispielsweise können die Laschen 6 teilkreisförmig, rechteckig oder quadratisch ausgebildet sein.

### Bezugszeichenliste

- 1: Filtermodul
- 2: Aufnahmeelement
- 3: Steg
- 4: Filtereinsatz
- 5: Falz des Filterelements
- 6: Lasche
- 7: Aussparung
- 8: Austrittsseite
- 9: Eintrittsseite
- 10: Filterstufe
- 11: Hohlraum
- 12: Gelenk
- 13: Öffnung der Eintrittsseite
- 14: Falz
- 15: Teilabschnitt
- 16: Oberkante
- 17: Unterkante

## Patentansprüche

1. Filterstufe (10) zur Verwendung in einem Filtermodul (1), welches zur Abscheidung von Farbpartikeln aus einem Luftstrom ausgebildet ist, mit
einem Aufnahmeelement (2), das eine Eintrittsseite (9), für den Eintritt eines zu reinigenden Luftstroms, und eine Austrittsseite (8), für den Austritt des gereinigten Luftstroms, aufweist, wobei die Eintrittsseite (9) und die Austrittsseite (8) gegenüberliegend an dem Aufnahmeelement (2) angeordnet sind,
einem Filtereinsatz (4), der in dem Aufnahmeelement (2) aufgenommen ist, wobei das Aufnahmeelement (2) aus Karton ausgebildet ist,
wobei der Filtereinsatz (4) zumindest zwei Teilabschnitte (15) aufweist, die jeweils als ebene Fläche ausgebildet sind und von der Eintrittsseite (9) zur Austrittsseite (8) verlaufen, wobei zumindest zwei Teilabschnitte (15) derart zueinander geneigt angeordnet sind, dass sich diese an einem Seitenabschnitt, der zwischen einer Oberkante (16) und einer Unterkante (17) der Teilabschnitte (15) angeordnet ist, kontaktieren und miteinander verbunden sind, wobei der Filtereinsatz (4) einteilig und der Seitenabschnitt als Falz (5) ausgebildet ist, sodass eine Zickzack-Struktur entsteht,
wobei die Eintrittsseite (9) und die Austrittsseite (8) zumindest einen Steg (3) aufweist, der quer zur Ausrichtung der Teilelemente (15) verläuft, wobei an dem Steg (3) zumindest eine Lasche (6) angeordnet ist, die zwischen zwei Teilabschnitte (15) eingreift und diese positioniert, wobei die zumindest eine Lasche (6) des Stegs (3) der Eintrittsseite (9) bezüglich einer Länge des Stegs (3) versetzt zu der zumindest einen Lasche (6) des Stegs (3) der Austrittsseite (8) angeordnet ist.

2. Filterstufe (10) nach Anspruch 1,
**dadurch gekennzeichnet,**
**dass** der Filtereinsatz (4) zumindest drei, insbesondere drei bis vierzehn, Teilabschnitte (15) aufweist.

3. Filterstufe (10) nach einem der vorstehenden Ansprüche,
**dadurch gekennzeichnet,**
**dass** zumindest zwei, insbesondere alle, Teilabschnitte (15) parallel zu einer Verbindungsebene zwischen der Eintrittsseite (9) und der Austrittsseite (8) ausgerichtet sind.

4. Filterstufe (10) nach Anspruch 1 oder 2,
**dadurch gekennzeichnet,**
**dass** zumindest zwei, insbesondere alle, Teilabschnitte (15) geneigt, insbesondere um einen Winkel zwischen 5 und 50° geneigt, zu einer Verbindungsebene zwischen der Eintrittsseite (9) und der Austrittsseite (8) ausgerichtet sind.

5. Filterstufe (10) nach Anspruch 1,
**dadurch gekennzeichnet,**
**dass** jeder Steg (3) zumindest zwei Laschen (6) aufweist, die bezüglich einer Länge des Stegs (3) der Eintrittsseite (9) und der Austrittsseite (8) derart versetzt angeordnet sind, dass entlang der Stege (3) Aussparungen (7) entstehen, in welchen die Teilabschnitte (15) gehalten werden.

6. Filterstufe (10) nach einem der Ansprüche 1 bis 5,
**dadurch gekennzeichnet,**
**dass** die Laschen (6) einteilig mit dem Steg (3) verbunden und durch ein Gelenk (12) kippbar bezüglich des Stegs (3) angeordnet sind.

7. Filterstufe (10) nach einem der Ansprüche 1 bis 6,
**dadurch gekennzeichnet,**
**dass** die Laschen (6) konische Seitenkanten aufweisen, sodass die Teilabschnitte (15) des Filtereinsatzes (4) geneigt zwischen der Eintrittsseite (9) und der Austrittsseite (8) gehalten werden.

8. Filterstufe (10) nach einem der vorstehenden Ansprüche,
**dadurch gekennzeichnet,**
**dass** das Aufnahmeelement (2) an zumindest zwei Seitenwänden, die zwischen der Eintrittsseite (9) und der Austrittsseite (8) angeordnet sind, jeweils einen Falz (14) aufweist, sodass das Aufnahmeelement (2) zu einem in Wesentlichem zweidimensionalen Element faltbar ist.

9. Filterstufe (10) nach einem der vorstehenden Ansprüche,
**dadurch gekennzeichnet,**
**dass** der Filtereinsatz (4) ein rezyklierbares Material und/oder Polyestermaterial enthält.

10. Filterstufe (10) nach einem der vorstehenden Ansprüche,
**dadurch gekennzeichnet,**
**dass** das Aufnahmeelement (2) an der Eintrittsseite (9) und an der Austrittsseite (8) eine quadratische oder rechteckige Grundform aufweist, wobei ein Abstand zwischen der Eintrittsseite (9) und der Austrittsseite (8) kleiner als eine Seitenkante der Grundform ist, insbesondere beträgt der Abstand höchstens der Hälfte der Länge einer Seitenkante.

11. Verfahren zum Transport mehrerer Filterstufen (10) nach einem der Ansprüche 8 bis 10, wobei das Aufnahmeelement (2) in einem aufgefalteten dreidimensionalen Zustand und in einem nicht aufgefalteten zweidimensionalen Zustand in zwei Raumrichtungen eine identische Größe aufweist, sodass zusammengebaute und nicht zusammengebaute Filterstufen (10) in einem Aufnahmeelement (2') eines Filtermoduls (1) transportiert werden können.

## Claims

1. Filter stage (10), for use in a filter module (1) configured for separating paint particles from an airflow, comprising
a receiving element (2) which has an inlet side (9) for admitting an airflow to be cleaned and an outlet side (8) for discharging the cleaned airflow, the inlet side (9) and the outlet side (8) being arranged opposite one another on the receiving element (2),
a filter insert (4) which is received in the receiving element (2), the receiving element (2) being made of cardboard,
wherein the filter insert (4) has at least two sub-portions (15) which are each formed as a planar face and extend from the inlet side (9) to the outlet side (8), at least two sub-portions (15) being arranged at an inclination to one another in such a way that they contact at a side portion, arranged between an upper edge (16) and a lower edge (17) of the sub-portions (15), and are interconnected, the filter insert (4) being formed in a single piece and the side portion being formed as a fold (5) so as to result in a zigzag structure,
wherein the inlet side (9) and the outlet side (8) have at least one web (3) which extends transverse to the orientation of the sub-elements (15), at least one tab (6) being arranged on the web (3) and engaging between two sub-portions (15) and positioning them, the at least one tab (6) of the web (3) of the inlet face (9) being arranged offset from the at least one tab (6) of the web (3) of the outlet face (8) in terms of a length of the web (3).

2. Filter stage (10) according to claim 1,
**characterised**
**in that** the filter inset (4) has at least three, in particular three to fourteen, sub-portions (15).

3. Filter stage (10) according to any of the preceding claims,
**characterised**
**in that** at least two, in particular all, sub-portions (15) are orientated parallel to a connecting plane between the inlet side (9) and the outlet side (8).

4. Filter stage (10) according to either claim 1 or claim 2,
**characterised**
**in that** at least two, in particular all, sub-portions (15) are at an inclination, in particular at an angle of between 5 and 50°, to a connecting plane between the inlet side (9) and the outlet side (8).

5. Filter stage (10) according to claim 1,
**characterised**
**in that** each web (3) has at least two tabs (6), which are arranged offset, in terms of a length of the web (3) of the inlet side (9) and outlet side (9), so as to result in clearances (7), in which the sub-portions (15) are held, along the webs (3).

6. Filter stage (10) according to any of claims 1 to 5,
**characterised**
**in that** the tabs (6) are integrally connected to the web (3) and arranged tiltable, by way of a hinge (12), with respect to the web (3).

7. Filter stage (10) according to any of claims 1 to 6,
**characterised**
**in that** the tabs (6) have conical side edges, in such a way that the sub-portions (15) of the filter insert (4) are held at an inclination between the inlet side (9) and the outlet side (8).

8. Filter stage (10) according to any of the preceding claims,
**characterised**
**in that** the receiving element (2) has a fold (14) on each of at least two side walls which are arranged between the inlet side (9) and the outlet side (8), in such a way that the receiving element (2) can be folded to form a substantially two-dimensional element.

9. Filter stage (10) according to any of the preceding claims,
**characterised**
**in that** the filter insert (4) contains a recyclable material and/or polyester material.

10. Filter stage (10) according to any of the preceding claims,
**characterised**
**in that** the receiving element (2) has a square or rectangular base shape on the inlet side (9) and on the outlet side (8), a distance between the inlet side (9) and the outlet side (8) being less than a side edge of the base shape, in particular the distance being at most half the length of a side edge.

11. Method for transporting a plurality of filter stages (10) according to any of claims 8 to 10, wherein the receiving element (2) has an identical size in two spatial directions in an unfolded, three-dimensional state and in a nonunfolded, two-dimensional state, in such a way that assembled and unassembled filter stages (10) can be transported in a receiving element (2') of a filter module (1).

## Revendications

1. Étage filtrant (10) destiné à être utilisé dans un module filtrant (1) qui est conçu pour séparer des particules de peinture provenant d'un flux d'air, comportant :
un élément de réception (2) qui comporte un côté d'entrée (9) pour l'admission d'un flux d'air à épurer et un côté de sortie (8) pour l'évacuation du flux d'air épuré, dans lequel le côté d'entrée (9) et le côté de sortie (8) sont agencés l'un en face de l'autre sur l'élément de réception (2),
un insert filtrant (4) qui est reçu dans l'élément de réception (2), dans lequel l'élément de réception (2) est formé à partir de carton,
dans lequel l'insert filtrant (4) comporte au moins deux portions partielles (15), qui sont respectivement réalisées sous la forme d'une surface plane et qui s'étendent du côté d'entrée (9) au côté de sortie (8), au moins deux portions partielles (15) étant agencées de manière inclinée l'une vers l'autre de telle sorte que celles-ci sont en contact avec une portion latérale qui est agencée entre un bord supérieur (16) et un bord inférieur (17) des portions partielles (15), et sont reliées l'une à l'autre, l'insert filtrant (4) étant réalisé d'un seul tenant et la portion latérale étant réalisée sous la forme d'une pliure (5), de telle sorte qu'une structure en zigzag est créée,
dans lequel le côté d'entrée (9) et le côté de sortie (8) comportent au moins une nervure (3) qui s'étend transversalement à l'orientation des sous-parties (15), au moins une languette (6) étant agencée sur la nervure (3) et s'engageant entre deux portions partielles (15) et positionnant celles-ci, ladite au moins une languette (6) de la nervure (3) du côté d'entrée (9) par rapport à une longueur de la nervure (3) étant agencée de manière décalée vis-à-vis de la au moins une languette (6) de la nervure (3) du côté de sortie (8).

2. Étage filtrant (10) selon la revendication 1,
**caractérisé en ce**
**que** l'insert filtrant (4) comporte au moins trois, en particulier trois à quatorze, portions partielles (15).

3. Étage filtrant (10) selon l'une des revendications précédentes,
**caractérisé en ce**
**qu'**au moins deux portions partielles (15), en particulier toutes les portions partielles, sont orientées parallèlement à un plan de liaison entre le côté d'entrée (9) et le côté de sortie (8).

4. Étage filtrant (10) selon la revendication 1 ou 2,
**caractérisé en ce**
**qu'**au moins deux portions partielles (15), en particulier toutes les portions partielles, sont inclinées, en particulier inclinées à un angle compris entre 5 et 50°, par rapport à un plan de liaison entre le côté d'entrée (9) et le côté de sortie (8).

5. Étage filtrant (10) selon la revendication 1,
**caractérisé en ce**
**que** chaque nervure (3) comporte au moins deux languettes (6) qui sont agencées de façon décalée par rapport à une longueur de la nervure (3) du côté d'entrée (9) et du côté de sortie (8), de telle sorte que le long des nervures (3) sont créés des évidements (7) dans lesquels les sections partielles (15) sont maintenues.

6. Étage filtrant (10) selon l'une des revendications 1 à 5,
**caractérisé en ce**
**que** les languettes (6) sont reliées d'un seul tenant à la nervure (3) et sont agencées de façon à pouvoir basculer par rapport à la nervure (3) au moyen d'une articulation (12) .

7. Étage filtrant (10) selon l'une des revendications 1 à 6,
**caractérisé en ce**
**que** les languettes (6) comportent des bords latéraux coniques, de telle sorte que les portions partielles (15) de l'insert filtrant (4) sont maintenues inclinées entre le côté d'entrée (9) et le côté de sortie (8).

8. Étage filtrant (10) selon l'une des revendications précédentes,
**caractérisé en ce**
**que** l'élément de réception (2) comporte respectivement une pliure (14) sur au moins deux parois latérales qui sont agencées entre le côté d'entrée (9) et le côté de sortie (8), de telle sorte que l'élément de réception (2) peut être plié pour former un élément sensiblement bidimensionnel.

9. Étage filtrant (10) selon l'une des revendications précédentes,
**caractérisé en ce**
**que** l'insert filtrant (4) contient un matériau recyclable et/ou un matériau polyester.

10. Étage filtrant (10) selon l'une des revendications précédentes,
**caractérisé en ce**
**que** l'élément de réception (2) a, du côté d'entrée (9) et du côté de sortie (8), une forme de base carrée ou rectangulaire, une distance entre le côté d'entrée (9) et le côté de sortie (8) étant inférieure à un bord latéral de la forme de base, la distance s'élevant en particulier au plus à la moitié de la longueur d'un bord latéral.

11. Procédé pour transporter plusieurs étages filtrants (10) selon l'une des revendications 8 à 10, dans lequel l'élément de réception (2) a une taille identique dans un état tridimensionnel déplié et dans un état bidimensionnel non déplié dans deux directions spatiales, de telle sorte que des étages filtrants (10) assemblés et non assemblés peuvent être transportés dans un élément de réception (2') d'un module filtrant (1).
